# EUROPÄISCHE PATENTANMELDUNG

(11) **EP 1 013 393 A1**
(43) Veröffentlichungstag der Anmeldung: **28.06.2000**
(21) Anmeldenummer: 99890019.5
(22) Anmeldetag: 27.01.1999
(51) Int. Cl.: B29C 45/14

(54) **Verfahren und Vorrichtung zum Umspritzen der Ränder von dünnwandigen Platten**

(30) Priorität: 22.12.1998 AT 85298 U
(71) Anmelder: GBM Kunststofftechnik und Formenbau GmbH, 5230 Mattighofen (AT)
(72) Erfinder: Barth, Roland, 5230 Mattighofen (AT); Barth, Georg, 5222 Munderfing (AT)
(74) Vertreter: Rippel, Andreas, Dipl.-Ing.

(57) **Zusammenfassung**

Bei einem Verfahren zum Umspritzen der Ränder von dünnwandigen Platten (1), insbesonders aus bruchgefährdeten Materialien, wie Glas oder Keramik, mittels einer zwei zueinander bewegbare Formhälften (3,4) aufweisenden Vorrichtung, zwischen denen die Ränder festgehalten werden, werden vorerst die beiden Formhälften (3,4) zueinander bei im wesentlichen maximalem Preßdruck bewegt, wobei die Ränder der Platte (1) aufgenommen, jedoch nicht belastet werden, und nach Erreichung des maximalen Preßdruckes wird ein inneres Dichtkissen (8) mit einem dem Material der Platte (1) entsprechenden Druck gegen die Platte (1) gedrückt.

Dadurch kann der maximale Preßdruck der beiden Formhälften (3,4) hunderte Tonnen betragen, trotzdem wird die Platte (1) nicht beschädigt. Andererseits kann durch entsprechende Einstellung des Druckes des Dichtkissens (8) ein Austreten des eingespritzten Kunststoffes aus dem Formhohlraum (5) sicher vermieden werden.

## Beschreibung

Die Erfindung bezieht sich auf ein Verfahren zum Umspritzen der Ränder von dünnwandigen Platten, insbesonders aus bruchgefährdeten Materialien, wie Glas oder Keramik, mittels einer zwei zueinander bewegbare Formhälften aufweisenden Vorrichtung, zwischen denen die Ränder festgehalten werden. Weiters ist Gegenstand der Erfindung eine Vorrichtung zur Durchführung dieses Verfahrens.

Auf verschiedenen Gebieten der Technik müssen dünnwandige Platten mit einem Rand aus Kunststoff versehen werden. Nur als Beispiel seien Schiebefenster für Tiefkühltruhen oder auch Autofenster genannt. Insbesondere wenn die Platten aus bruchgefährdeten Materialien bestehen, ist die Durchführung des Umspritzens schwierig. Wird nämlich der Preßdruck der beiden zueinander bewegbaren Formhälften zu groß gewählt, gehen die Platten zu bruch, bei zu geringem Preßdruck tritt der umspritzte Kunststoff zwischen den beiden Formhälften aus.

Zur Vermeidung dieses Nachteiles wurde schon vorgeschlagen, eine Formhälfte mit einer Feder belasteten verschiebbaren Auflage aus Kunststoff zu versehen, der weicher als die zu umspritzende Glasplatte ist. Die Glasplatte wird erst auf diese Auflage aufgelegt und dann zwischen der anderen Formhälfte und der Auflage gehalten. Nachteilig ist dabei vor allem, daß der Federdruck der Auflage schwer oder gar nicht dem Material der zu umspritzenden Platte angepaßt werden kann. Außerdem muß das Material der Auflage sehr weich sein.

Die Erfindung hat es sich zum Ziel gesetzt, ein Verfahren zum Umspritzen der Ränder von dünnwandigen Platten zu schaffen, bei dem jegliche Beschädigung der Platten sicher vermieden wird, trotzdem aber durch Anpassung an das Material der zu umspritzenden Platten ein Austreten des eingespritzten Kunststoffes aus dem Formenhohlraum nicht möglich ist. Erreicht wird dies dadurch, daß vorerst die beiden Formhälften zueinander bei im wesentlichen maximalem Preßdruck bewegt werden, wobei die Ränder der Platte aufgenommen, jedoch nicht belastet werden, und nach Erreichung des maximalen Preßdruckes ein inneres Dichtkissen mit einem dem Material der Platte entsprechenden Druck gegen die Platte gedrückt wird.

Bei Durchführung des erfindungsgemäßen Verfahrens kann der maximale Preßdruck der beiden Formhälften hunderte Tonnen betragen, trotzdem wird die Platte nicht beschädigt. Andererseits kann durch entsprechende Einstellung des Druckes des Dichtkissens ein Austreten des eingespritzten Kunststoffes aus dem Formhohlraum sicher vermieden werden.

Eine Vorrichtung zur Durchführung des erfindungsgemäßen Verfahrens weist zwei zueinander bewegbare Formhälften auf, und zeichnet sich dadurch aus, daß innerhalb der einen Formhälfte ein Dichtkissen verschiebbar angeordnet ist, das mit regelbarem Druck gegen die Platte drückbar ist.

Bei einem zweckmäßigen Ausführungsbeispiel der Erfindung sind zur Positionierung der Platte vor deren Aufnahme durch die Formhälften bzw. dem Dichtkissen an einer Formhälfte Saugnäpfe angeordnet.

Bei einer erfindungsgemäßen Vorrichtung ist es keineswegs erforderlich, daß das Material des Dichtkissens weicher als das Material der Platte ist. Es ist daher erfindungsgemäß möglich, daß das Dichtkissen aus Metall besteht.

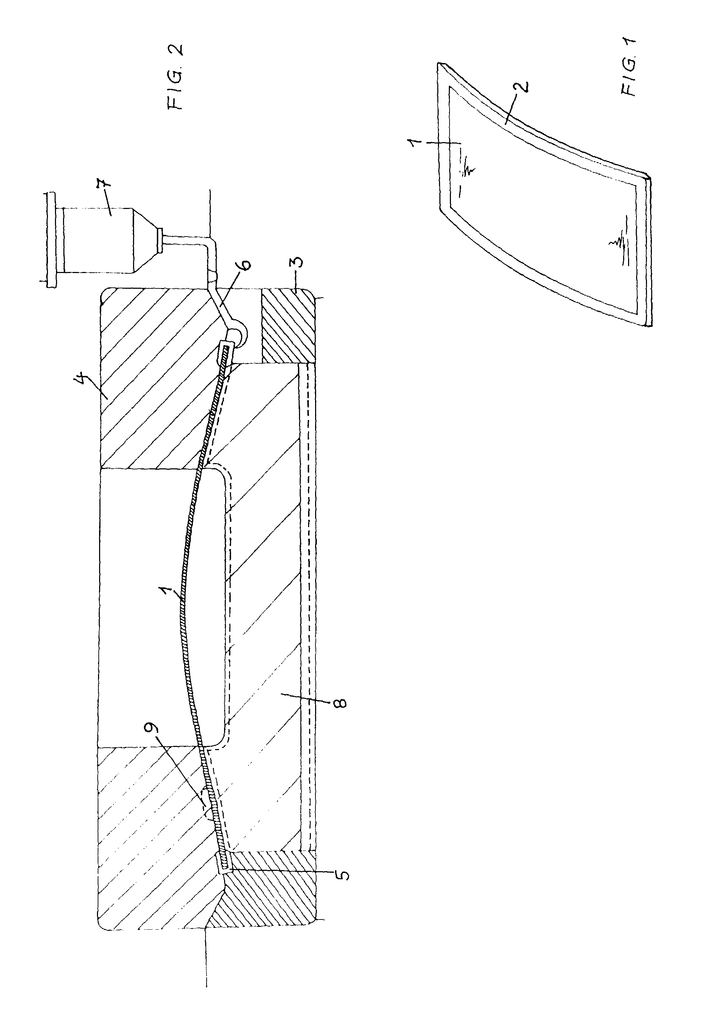

Nachstehend ist die Erfindung anhand der Zeichnungen näher erläutert. Dabei zeigt Fig. 1 in schaubildlicher Ansicht das Endprodukt eines erfindungsgemäßen Verfahrens, nämlich eine Glasplatte mit einem Kunststoffrand. Fig. 2 stellt vereinfacht im Schnitt eine erfindungsgemäße Vorrichtung dar.

Gemäß Fig. 1 ist eine gewölbte Glasplatte 1 mit einem Rand 2 versehen, der in einer Vorrichtung nach Fig. 2 unter Anwendung des erfindungsgemäßen Verfahrens hergestellt wurde.

Die Vorrichtung nach Fig. 2 besitzt zwei zueinander bewegbare Formhälften 3 und 4, die im aneinander liegenden Zustand einen Formhohlraum 5 einschließen, der der Form des Randes 2 entspricht. Der Formhohlraum 5 ist über einen Einspritzkanal 6 mit einer schematisch angedeuteten Spritzgießeinheit verbunden.

Innerhalb der Formhälfte 3 ist ein Dichtkissen 8 verschiebbar angeordnet, das unabhängig von den Formhälften 3 und 4 bewegbar ist. Die erfindungsgemäße Vorrichtung weist zum Positionieren der Glasplatte 1 überdies Saugnäpfe 9 auf, von denen einer mit seinem Umriß angedeutet ist.

Soll die Glasplatte 1 mit einem Rand 2 umspritzt werden, wird diese zwischen die auseinandergefahrenen Formhälften 3, 4 eingesetzt und mittels der Saugnäpfe 9 positioniert bzw. gehalten. Anschließend werden die beiden Formhälften 3, 4 zueinander bewegt und mit hohem Druck aneinandergepreßt.

Wie aus der Zeichnung ersichtlich ist, in der der Zustand bei aneinandergepreßten Formhälften 3, 4 dargestellt ist, wird die Glasplatte 1 durch den Druck der Formhälften 3,4 nicht belastet, sodaß dieser Druck unabhängig vom Material der Glasplatte 1 sehr hoch sein kann und mehrere hundert Tonnen betragen kann.

Das Dichtkissen 8 befindet sich hiebei etwa in einer Lage, wie sie in Fig. 2 mit strichlierten Linien angedeutet ist.

Nunmehr wird das Dichtkissen 8 innerhalb der Formhälfte 3 gegen die Glasplatte 1 verschoben und an diese angedrückt. Der Formhohlraum 5 wird dadurch völlig geschlossen.

Die Kraft bzw. der Druck mit dem das Dichtkissen 8 an der Glasplatte 1 anliegt, kann sehr genau dosiert und dem Material der Glasplatte 1 angepaßt werden. Eine Bruchgefahr für die Glasplatte 1 wird damit praktisch ausgeschlossen. Trotzdem kann der Formhohlraum 5 nach innen zu so gut abgedichtet werden, daß das nunmehr über den Spritzkanal 6 von der Spritzgießeinheit 7 eingespritzte Material nicht nach innen austritt.

Im Rahmen der Erfindung sind zahlreiche Abänderungen möglich. So könnte das Dichtkissen 8 auch innerhalb der Formhälfte 4 bewegbar angeordnet sein. Auch ist die Erfindung keineswegs auf das Umspritzen von gewölbten Glasplatten beschränkt, sie ist vielmehr beim Umspritzen der Ränder von allen dünnwandigen Platten anwendbar.

## Patentansprüche

1. Verfahren zum Umspritzen der Ränder von dünnwandigen Platten (1), insbesonders aus bruchgefährdeten Materialien, wie Glas oder Keramik, mittels einer zwei zueinander bewegbare Formhälften (3,4) aufweisenden Vorrichtung, zwischen denen die Ränder festgehalten werden, **dadurch gekennzeichnet,** daß vorerst die beiden Formhälften (3,4) zueinander bei im wesentlichen maximalem Preßdruck bewegt werden, wobei die Ränder der Platte (1) aufgenommen, jedoch nicht belastet werden, und nach Erreichung des maximalen Preßdruckes ein inneres Dichtkissen (8) mit einem dem Material der Platte (1) entsprechenden Druck gegen die Platte (1) gedrückt wird.

2. Vorrichtung zur Durchführung des Verfahrens nach Anspruch 1, mit zwei zueinander bewegbaren Formhälften, **dadurch gekennzeichnet,** daß innerhalb der einen Formhälfte (3) ein Dichtkissen (8) verschiebbar angeordnet ist, das mit regelbarem Druck gegen die Platte (1) drückbar ist.

3. Vorrichtung nach Anspruch 2, **dadurch gekennzeichnet,** daß zur Positionierung der Platte (1) vor deren Aufnahme durch die Formhälften (3,4) bzw. dem Dichtkissen (8) an einer Formhälfte (4) Saugnäpfe (9) angeordnet sind.

4. Vorrichtung nach Anspruch 2 oder 3, **dadurch gekennzeichnet,** daß das Dichtkissen (8) aus Metall besteht.
